# EUROPEAN PATENT SPECIFICATION

(11) **EP 1 029 437 B1**
(45) Date of publication and mention of the grant of the patent: **06.08.2003**
(21) Application number: 00201587.3
(22) Date of filing: 17.05.1995
(51) Int. Cl.: A01D 43/10

(54) **Mower conditioner**
Mäh- und Konditioniervorrichtung
Faucheuse conditionneuse

(30) Priority: 19.05.1994 NL 9400824
(43) Date of publication of application: 23.08.2000
(62) Divisional of application: 95201283.9
(73) Proprietor: MAASLAND N.V., 3155 PD Maasland (NL)
(72) Inventor: Koorn, Maarten, 3123 CP Schiedam (NL)
(74) Representative: Corten, Maurice Jean F.M.

(56) References cited:
- DE-A- 2 028 614
- NL-A- 7 009 908
- NL-A- 8 701 155
- US-A- 4 077 192
- US-E- R E23 972

## Description

The present invention relates to a mowing machine according to the preamble of claim 1.

Such a mowing machine is known from the German patent application DE-A-2028614. In this document a mower is described with behind this mower a hay conditioning machine. This hay conditioning machine comprises a rotor rotatable around a horizontal axis with on its surface elongated ridges. At each axial side of the rotor, knives are attached next to these ridges. The knives cut unmowed overhanging crop in a vertical plane in order to avoid wrapping around the axis of the rotor.

The invention has for its object to provide an alternative mowing machine of the above kind which is capable of mowing crops varying in thickness, length and quantity, while maintaining an appropriate crushing operation.

In accordance with the invention, the mowing machine as set forth in the opening paragraph comprises the features of the characterizing part of claim 1. This offers the advantage that the crushing elements, when viewed in the direction of rotation of the rotor, are relatively rigid, whereas the crushing elements in a direction perpendicular to the direction of rotation of the rotor are capable of easily deflecting and springing back again.

To obtain an even better cutting operation with the outermost crushing elements, according to a further feature of the invention, the outermost crushing elements are tapered as well as flat in profile.

According to still another feature of the invention, the rotor is near its ends at least partly bounded by side-plate parts, the outermost crushing elements being disposed on the rotor at a distance of about 1 cm therefrom. Due to the fact that the outermost crushing elements are fitted relatively close to the side-plate parts, any material adhering thereto is cut loose and removed.

To obtain an even better crushing operation, the mowing machine according to the invention has the further feature that, in conjunction with the crushing device, it constitutes a crop feed-through channel element provided with an adjustable beater bar running parallel to the rotor. Depending on the quantity and/or the length and/or the thickness and/or the type of material that the crushing device receives for processing during mowing, a distance between the crushing elements and the cutter bar can be set such that an optimum crushing action is obtained and the risk of winding and possible clogging of the crushing device is minimised.

In a preferred embodiment of the invention, the rotor is, in a horizontal plane, movable with respect to the cutter bar. To enable the rotor to be adjusted in an easy way, in accordance with the invention, the rotor is pivot-mounted in a movable frame. According to a further feature of the invention, the adjusting means comprise clamping means, with the aid of which, after the rotor has been adjusted with the frame, the frame can be fixed with respect to the cutter bar.

To obtain an uncomplicated adjustment, the mowing machine according to the invention is characterized in that the clamping means comprise a clamping bolt and a strip provided with holes. Depending on the desired setting of the distance between crushing elements and cutter bar, the clamping bolt is to be inserted in one of the holes. According to a further feature of the invention, the clamping means comprise a clamping bracket, with the aid of which a part of the frame can be secured on a suspension beam of the cutter bar. To simplify the frame adjustment, the clamping bracket is capable of being slightly loosened, resulting in that the frame remains loosely connected with the cutter bar when the clamping bolt is removed. The frame can then easily be moved with respect to the cutter bar.

According to a further embodiment of the invention, the adjusting means may also comprise a screw spindle or a cylinder. With the screw spindle or the cylinder, the distance between crushing elements and the cutter bar is continuously adjustable.

To achieve a simple and uniform adjustment operation, according to a further feature of the invention, the adjusting means are arranged on the frame at either side of the rotor. This enables the rotor to be moved parallel to the cutter bar.

The invention will now be further explained with reference to an exemplary embodiment as represented by the drawings, in which:

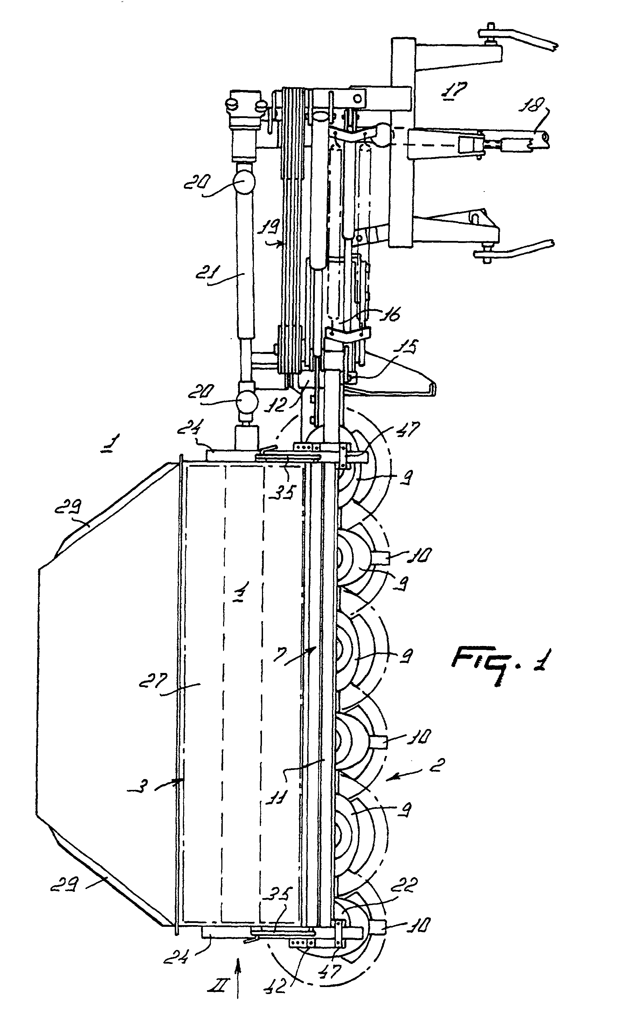

Figure 1 shows a plan view of the mower-conditioner according to the invention, and
Figure 2 shows a side view of the machine depicted in Figure 1.

The mowing machine 1 represented in the drawings comprises a mowing unit 2 and a crushing device 3 including a rotor 4 and crushing elements 5, as well as an element 7 constituting, in conjunction with this crushing device 3, a crop feed-through channel 6.

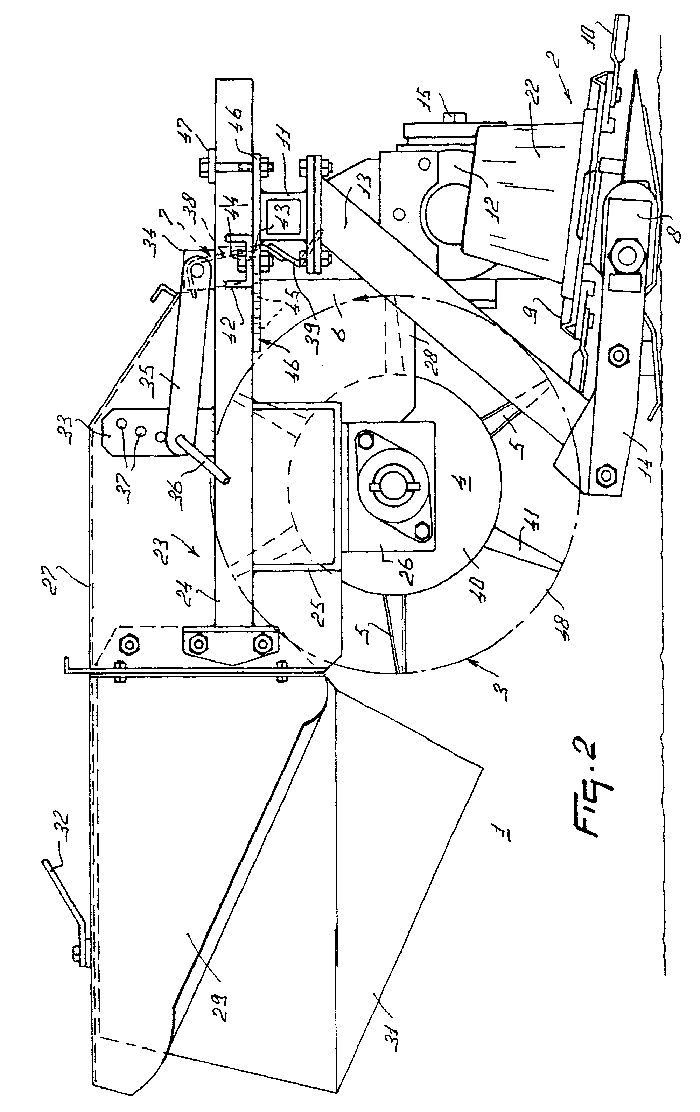

In the depicted embodiment of the invention, the mowing unit 2 comprises a cutter bar 8, above which there are arranged a half-dozen mowing discs 9 which are capable of rotation about vertical axes and are provided with cutting blades 10. A suspension beam 11 is fitted above and parallel to the cutter bar 8. The connection between the cutter bar 8 and the suspension beam 11 is constituted at one end by a gearbox 12 (see Figure 2) and at the other by a supporting element 13 extending from the suspension beam 11 obliquely rearwards and downwards, and connected to this supporting element 13 near the foot of the latter, a connecting element 14, extending essentially horizontally, which is also connected with the cutter bar 8.

The mowing machine is in the usual way capable of being swung about an approximately horizontal pivot shaft 15 which extends in the direction of travel in operative condition and is connected with a carrying arm 16 comprising a carrying frame 17 which enables the mowing machine to be coupled to a three-point hitch of a tractor or a similar vehicle. The drive of the mowing machine is effected from a power-take-off shaft 18 of a (non-shown) tractor through various transmission elements in a gearbox 12 connected to the carrying arm 16, from which gearbox 12 the mowing unit 2 is driven by a belt transmission drive 19 and the various transmission elements in the gearbox 12, and the drive of the crushing device 3 is effected by means of an intermediate shaft 21 provided with universal joints 20.

The outermost mowing disc on the side where the elements 13 and 14 form the connection between the cutter bar 8 and the suspension beam 11 is provided with a hat-shaped crop guide device 22.

There is provided a frame 23 slidably connected with the suspension beam 11, which frame 23 comprises supporting beams 24, a bracket 25 fixed in position under each of these, and an angle plate 26 fixed in position under this bracket. The crushing device 3 is pivot-mounted between the angle plates 26. In addition, top-plate parts 27 and side-plate parts 28 and 29 are attached to the slidable frame 23, with the rear side-plate parts 29 being slanted inwardly in rearward direction and being bent outwardly at the bottom side. At the inside of the side-plate parts 29 there are provided further side plates 30, which have at their bottom side a part 31 extending inwardly and which can be moved further inwardly by means of a grip 32 to enable a desired swath limitation to be obtained.

Further, a first support 33 and a second support 34 are fixed in position on the supporting beams 24. A connecting strip 35 pivot-mounted in the second support 34 is capable of being fixed in position in the first support 33 by means of a shaft 36 and holes 37 such that the position of this connecting strip element 35 and, with that, the strip 38 which is fixedly fastened to the latter and extends in the longitudinal direction of the crushing device 3, with the beater bar 39 being attached to it, determines the desired size of the crop feed-through channel 6 (see Figure 2).

The rotor 4 of the crushing device 3 comprises a cylindrical carrier 40 on which the crushing elements 5 are disposed in mutually staggered positions. The crushing elements 5 are tapered, they have an I-section and they also protrude from the roller outwards. The outermost crushing elements 41 at either side of the cylindrical carrier 40 are flat, tapered and also protruding from the roller outwards. Thus, the outermost crushing elements are dagger-shaped and made from a flat strip of spring steel. Viewed from above, the outermost crushing elements are disposed at a distance of about one centimetre from the side-plate parts 28. Because, during operation, the dagger-shaped outermost flat crushing elements 41 move relatively close along the side-plate parts 28, any material for crushing which has adhered to the side-plate parts 28 or which has accumulated in the corners of the crop feed-through channel 6 is cut up. Since the cut-up crop winds less easily and is better removable, the rotor 4 is prevented from dragging, and the crop feed-through channel 6 and possibly the rotor 4 is/are prevented from getting clogged with crop. The application of a relatively thin strip of spring steel for the outermost crushing elements 41 offers the advantage that the crushing elements 41, when viewed in the direction of rotation of the rotor 4, are relatively rigid, whereas the crushing elements 41 in a direction perpendicular to the direction of rotation of the rotor 4 are capable of easily deflecting and springing back again. The latter may be the case when, for instance, foreign matter such as a piece of wood or stone lands in the rotor 4. It will be obvious that more than two dagger-shaped crushing elements 41 can be placed on the cylindrical carrier 40, and that the crushing elements 41 can be made of a different material having the same properties as spring steel, such as e.g. a synthetic material.

As has been set forth hereinbefore, it is possible to shift the frame 23, wherein the crushing device 3 is rotatably suspended, with respect to the cutter bar 8 and to fix it again in position. For this purpose, the two supporting beams 24 comprise, near the front, a U-section part 42 provided with a hole 43 in which a bolt 44 is inserted, which bolt 44 is optionally inserted in any one of a series of holes 45 in a strip 46 fixedly connected with the suspension beam 11 of the cutter bar 8. Near the end of the strips 46 there is also provided a clamping bracket 47, through which the box-like supporting beams 24 are fed and by means of which the supporting beams 24 can be clamped onto the strip 46.

The distance between the circle 48 described by the crushing elements 5, 41 and the cutter bar 8 can be adjusted by slightly loosening the clamping brackets 47 and removing the bolts 44 and shifting the supporting beams 24 with respect to the strips 46. When the correct distance has been set, the frame 23 can be fixed again by means of the suspension beam 11 of the cutter bar 8 by tightening the clamping brackets 47 and mounting the bolts 44. It will be obvious that the adjustment of the crushing device 3 in relation to the mowing unit 2 can also take place in a way different from what has been set forth hereinbefore. A continuous adjustment of the crushing device with respect to the mowing unit 2 can be obtained, for instance, by adjusting the crushing device 3 by means of a spindle or a cylinder.

## Claims

1. A mowing machine comprising a cutter bar (8) and a crushing device (3) including a rotor (4) provided with crushing elements (5), at least the outermost crushing element (41), at either side of the rotor (4), being made from a flat strip of material, **characterized in that** the material is spring steel or a material having the same properties as spring steel, and **in that** the material has a thickness of between 2 and 5 mm.

2. A mowing machine according to claim 1, **characterized in that** the outermost crushing elements (41) are tapered as well as flat in profile.

3. A mowing machine according to claim 1 or 2, **characterized in that** the rotor (4) is near its ends at least partly bounded by side-plate parts (28).

4. A mowing machine according to claim 3, **characterized in that** the outermost crushing elements (41) are disposed on the rotor (4) at a distance of about 1 cm from the side-plate parts (28).

5. A mowing machine according to any one of the preceding claims, **characterized in that**, in conjunction with the crushing device (3), it constitutes a crop feed-through channel element (6) provided with an adjustable beater bar (39) running parallel to the rotor (4).

## Patentansprüche

1. Mähmaschine mit einem Mähbalken (8) und einer Quetschvorrichtung (3), die einen mit Quetschelementen (5) versehenen Rotor (4) enthält, wobei zumindest das äußere Quetschelement (41) auf beiden Seiten des Rotors (4) aus einem flachen Materialstreifen hergestellt ist,
**dadurch gekennzeichnet, daß** das Material Federstahl oder ein Material mit denselben Eigenschaften wie Federstahl ist, und daß das Material eine Dicke von 2 bis 5 mm aufweist.

2. Mähmaschine nach Anspruch 1,
**dadurch gekennzeichnet, daß** die äußeren Quetschelemente (41) verjüngt ausgebildet sind und ein flaches Profil aufweisen.

3. Mähmaschine nach Anspruch 1 oder 2,
**dadurch gekennzeichnet, daß** der Rotor (4) nahe seinen Enden zumindest teilweise durch Seitenplattenteile (28) eingegrenzt ist.

4. Mähmaschine nach Anspruch 3,
**dadurch gekennzeichnet, daß** die äußeren Quetschelemente (41) an dem Rotor (4) in einem Abstand von etwa 1 cm von den Seitenplattenteilen (28) angeordnet sind.

5. Mähmaschine nach einem der vorhergehenden Ansprüche,
**dadurch gekennzeichnet, daß** in Verbindung mit der Quetschvorrichtung (3) ein Gutdurchflußkanal (6) gebildet ist., der eine parallel zu dem Rotor (4) verlaufende, verstellbare Schlagschiene (39) aufweist.

## Revendications

1. Faucheuse comprenant une barre de coupe (8) et un dispositif de broyage (3) comprenant un rotor (4) muni d'éléments de broyage (5), au moins l'élément de broyage extérieur (41), de chaque côté du rotor (4), étant fait d'une bande plate métallique, **caractérisée en ce que** le matériau est de l'acier à ressort ou un matériau ayant les mêmes propriétés que l'acier à ressort, et **en ce que** l'épaisseur du matériau est comprise entre 2 et 5 mm.

2. Faucheuse selon la revendication 1, **caractérisée en ce que** les éléments de broyage extérieurs (41) ont un profil aussi bien conique que plat.

3. Faucheuse selon la revendication 1 ou 2, **caractérisée en ce que** le rotor (4) est au moins partiellement délimité par des portions de plaques latérales (28) près de ses extrémités.

4. Faucheuse selon la revendication 3, **caractérisée en ce que** les éléments de broyage extérieurs (41) sont disposés sur le rotor (4) à une distance d'environ 1 cm des portions de plaques latérales (28).

5. Faucheuse selon l'une quelconque des revendications précédentes, **caractérisée en ce que**, conjointement avec le dispositif de broyage (3), elle constitue un élément de canal de passage de culture muni d'une batte réglable s'étendant parallèlement au rotor.
